Europäisches Patentamt

European Patent Office

Office européen des brevets

(11) Veröffentlichungsnummer: **0 122 513**
B1

(12) **EUROPÄISCHE PATENTSCHRIFT**

(45) Veröffentlichungstag der Patentschrift:
01.06.88

(51) Int. Cl.⁴: **B 62 D 33/06**, F 16 F 3/08

(21) Anmeldenummer: **84103267.5**

(22) Anmeldetag: **24.03.84**

(54) Elastische Fahrerhauslagerung eines Lastkraftwagens.

(30) Priorität: **19.04.83 DE 3314093**

(43) Veröffentlichungstag der Anmeldung:
**24.10.84 Patentblatt 84/43**

(45) Bekanntmachung des Hinweises auf die Patenterteilung:
**01.06.88 Patentblatt 88/22**

(84) Benannte Vertragsstaaten:
**AT DE FR GB IT**

(56) Entgegenhaltungen:
**FR - A - 2 555 688**
**GB - A - 678 809**
**US - D - 463 671**

(73) Patentinhaber: **Jörn GmbH, Porschestrasse 10, D-7012 Fellbach (DE)**

(72) Erfinder: **Jörn, Raoul, D-8992 Hengnau, Nr. 53 1/7, Post Wasserburg a.B. (DE)**

(74) Vertreter: **Neubauer, Hans-Jürgen, Dipl.-Phys., Fauststrasse 30, D-8070 Ingolstadt (DE)**

## Beschreibung

Die Erfindung betrifft eine elastische Fahrerhauslagerung eines Lastkraftwagens gemäss dem Oberbegriff des Anspruchs 1.

Bei der heute üblichen Konstruktion eines Lastkraftwagens ist das Fahrerhaus am vorderen Ende über dem Motor angebracht. Zur Wartung oder Reparatur des Motors muss daher das Fahrerhaus abgehoben werden. Dies ist so gelöst, dass an der Vorderseite zu beiden Seiten des Fahrerhauses Lager angeordnet sind, in denen das Fahrerhaus um eine Achse quer zur Fahrtrichtung nach vorne geklappt und dadurch abgehoben werden kann. Die dafür bisher benutzten Lager sind zwar brauchbar, aber wegen einer Reihe von nachteiligen Eigenschaften unbefriedigend.

Neben aufwendigen Lagerkonstruktionen mit Drehstabfedern sind Gummimetallagerungen für LKW-Fahrerhäuser bekannt. Ein bekanntes Lager (DE-A 2 229 436), das an der Vorderseite zu beiden Seiten eines Fahrerhauses anzubringen ist, besteht aus einem Gehäuse am Fahrgestellrahmen, in dem ein Gummimetallelement enthalten ist. Das Gummimetallelement umfasst ein äusseres Metallteil (Hülse) und ein inneres Metallteil mit dazwischenliegendem Gummi. In inneren Metallteil ist ein Lagerbolzen angebracht, der im eingebauten Zustand des Lagers quer und waagrecht zur Fahrzeugachse liegt und um den das Fahrerhaus kippbar ist. Von diesem Stand der Technik wurde bei der Gattungsbildung ausgegangen.

Vertikal angeregte Fahrbahnstösse werden von den mit nierenförmigen Aussparungen versehenen Gummielementen gut aufgenommen werden, so dass das Fahrerhaus in vertikaler Richtung befriedigend abgefedert sein dürfte. Kräfte in Fahrtrichtung, die beim Bremsen oder Anfahren auftreten, werden in den Gummielementen im wesentlichen in Druckrichtung eingeleitet, was eine gewünschte, starre Führung in Fahrtrichtung bewirkt. Quer zur Fahrtrichtung sind die Gummielemente im wesentlichen auf Schub beansprucht, wodurch im Vergleich zur Fahrtrichtung nur eine wenig starre Führung möglich ist. Dies hat zur Folge, dass bei Seitenkräften, wie sie bei Kurvenfahrten auftreten, das Fahrerhaus mit relativ weiten Ausschlägen unerwünscht seitlich auswandert, wodurch unangenehme seitliche Schaukel- und Schlingerbewegungen des Fahrerhauses entstehen können. Um hier zumindest teilweise eine Abhilfe zu schaffen, sind Puffer mit progressiver Federkennlinie vorgesehen, die jedoch einem relativ hohen Verschleiss aufgrund erheblicher Reibungskräfte und Relativbewegungen unterliegen werden.

Aufgabe der Erfindung ist es, ein gattungsgemässes elastisches Lager für ein klappbares Fahrerhaus eines Lastkraftwagens so weiterzubilden, dass das Fahrerhaus unter vertikal wirkenden Fahrstössen angenehm federt und in längs- und seitlicher Richtung gut geführt ist, wobei das Lager einfach und verschleissfrei aufgebaut sein soll.

Diese Aufgabe wird mit den kennzeichnenden Merkmalen des Anspruchs 1 gelöst.

Gemäss Anspruch 1 wird vorgeschlagen, dass Gummimetallelemente vorgesehen sind, deren Gummihaftflächen im wesentlichen senkrecht stehen, und dass diese Gummihaftflächen bei einem Teil der Gummimetallelemente quer zur Fahrtrichtung und bei dem anderen Teil in Fahrtrichtung verlaufen. Dabei wird erreicht, dass die Federkonstante des Lagers in vertikaler Richtung relativ klein ist, wodurch vertikal angeregte Fahrbahnstösse im Lager weich abgefangen werden und das Fahrerhaus in vertikaler Richtung angenehm federt. Bei Kräften in horizontaler Richtung, wie sie beim Bremsen, Beschleunigen und bei Kurvenfahrten auftreten, ist das Fahrerhaus dagegen relativ starr geführt, da dann die Gummielemente auf Druck mit relativ hoher Federkonstante und geringen Ausschlägen beansprucht sind. Seitliche Anschläge, die durch ihren Abrieb nur zu einer geringen Lebensdauer des Lagers führen, können hier entfallen; sämtliche Verformungen sind Molekularbewegungen in den Gummielementen.

Das Fahrerhaus ist dadurch weitgehend frei von seitlichen Schaukel- und Schwingbewegungen. Der Fahrkomfort wird für einen Fahrer wesentlich erhöht, wodurch ihm nicht nur sein Arbeitsplatz angenehmer gestaltet wird, sondern wegen der geringeren Arbeitsbelastung und der damit über eine längere Zeit anhaltenden Konzentrationsfähigkeit insgesamt die Fahrsicherheit verbessert wird.

Durch entsprechende Dimensionierung der Gummielemente können die Federkonstanten in den drei Koordinatenrichtungen weitgehend unabhängig voneinander nach Wunsch und Erfordernis abgestimmt werden. Beispielsweise kann der Federweg in vertikaler Richtung ca. 30 mm betragen, während er quer und in Fahrtrichtung im Betrieb nur 1 bis 2 mm ist. Die seitliche Härte ohne Anschlag ist bestimmend für den hohen Fahrkomfort.

Das Lager ist ausserordentlich kompakt herstellbar und hat daher vorteilhaft nur einen extrem kleinen Platzbedarf in dem ohnehin vollgepackten Bereich unter dem Fahrerhaus. Weiter ist im Vergleich zu der erreichten Verbesserung der Aufbau einfach und die Herstellung preisgünstig.

Mit den Merkmalen der Ansprüche 2 und 3 werden zwei unterschiedliche Gehäuseausführungen beansprucht, die je nach den vorliegenden Gegebenheiten bevorzugt einzusetzen sind. Gemäss Anspruch 2 soll das Lagergehäuse ein geschlossenes, annähernd rundes Aufnahmeauge enthalten, während nach Anspruch 3 ein keilförmiges oder wannenartiges Aufnahmeauge vorgesehen ist. Das Gehäuse kann im Bereich des Aufnahmeauges auch geteilt sein, so dass die Gummimetallelemente beim Zusammenfügen der beiden Gehäuseteile eingespannt oder eingepresst werden. In der Regel werden die Gehäuse bzw. die montierten Lager auf Lagerböcke am Fahrgestellrahmen aufgeschraubt; es ist jedoch auch denkbar, die Gehäuse direkt aus Fahrgestellrahmenteilen zu formen und die Gummielemente dort bei der Montage des Lkws einzusetzen.

Eine im Test bewährte und einer rationellen Herstellung entsprechende Ausführungsform eines Lagers ist in Anspruch 4 wiedergegeben. Dabei ist im Aufnahmeauge beiderseits des Lagerbolzens an einem gemeinsamen mittleren Metallteil je ein Gummielement unter Druckvorspannung eingebracht, und beiderseits des Aufnahmeauges sind Gummimetallteile mit einer Schubebene in Fahrtrichtung aufgesetzt, die gegen Verdrehen gegenüber dem Aufnahmeauge am Gehäuse gesichert und mit Hilfe des Lagerbolzens axial vorgespannt sind. Mit dem Lagerbolzen sind zudem beidseitig Bleche des Fahrerhauses gegen eine Distanzbüchse verschraubt. Die Bleche liegen über Gleitscheiben aus Kunststoff am Lager an und halten dieses axial unter Vorspannung zusammen. Ein wesentlicher Gesichtspunkt dabei ist der, dass die Gummielemente vorgespannt sind. Dies führt einerseits dazu, dass bei Belastungen des Lagers die jeweils entlasteten Gummiteile keine ungünstigen Zugspannungen erfahren, andererseits werden die Moleküle zumindest teilweise ausgerichtet, was die Gummieigenschaften vereinheitlicht und stabilisiert. Die Sicherung der seitlichen Gummimetallelemente am Gehäuse gegen Verdrehen kann durch übliche und bekannte Massnahmen, wie z.B. durch Rastverbindungen, vorgenommen werden. In einer bevorzugten Ausführungsform werden die Gummimetallteile mit ihren senkrechten Metallplatten in Bohrungen am Gehäuse über Kerbstifte gehalten.

In Anspruch 5 sind Zwischenplatten in den Gummielementen vorgeschlagen, die eine Querdehnung des Gummis weitgehend verhindern sollen, wodurch die Gummielemente bei Druckbeanspruchung noch wesentlich härter gemacht werden können. Insbesondere die kleinen Ausschläge quer und in Fahrtrichtung von 1 bis 2 mm, entsprechend dem weiter oben stehenden Ausführungsbeispiels, sind durch einvulkanisierte Zwischenplatten zu erzielen.

Da die Federkonstante des Lagers in vertikaler Richtung relativ klein ist und die vertikalen Ausschläge dadurch entsprechend gross sind, tragen die mittleren Metallteile an der Ober- und Unterseite elastische Begrenzerelemente, die sich bei Extrembelastungen an der Ober- bzw. Unterseite des Aufnahmeauges anlegen. Begrenzerelemente in seitlichen Richtungen sind, wie oben ausgeführt, nicht erforderlich.

Zwei Ausführungsbeispiele der Erfindung werden anhand einer Zeichnung mit weiteren Einzelheiten, Merkmalen und Vorteilen näher erläutert. Es zeigen:

Fig. 1 eine teilweise geschnittene (Schnittlinie B–B aus Fig. 2) Draufsicht auf ein Lager in axialer Richtung,

Fig. 2 einen Querschnitt (Schnittlinie A–A aus Fig. 1) durch ein Lager gemäss Fig. 1,

Fig. 3 eine Draufsicht auf das Lager gemäss Fig. 1 in radialer Richtung,

Fig. 4 eine teilweise geschnittene (Schnittlinie D–D aus Fig. 5) Draufsicht auf eine zweite Ausführungsform eines Lagers in axialer Richtung,

Fig. 5 einen Querschnitt (Schnittlinie C–C aus Fig. 4) durch ein Lager gemäss Fig. 4.

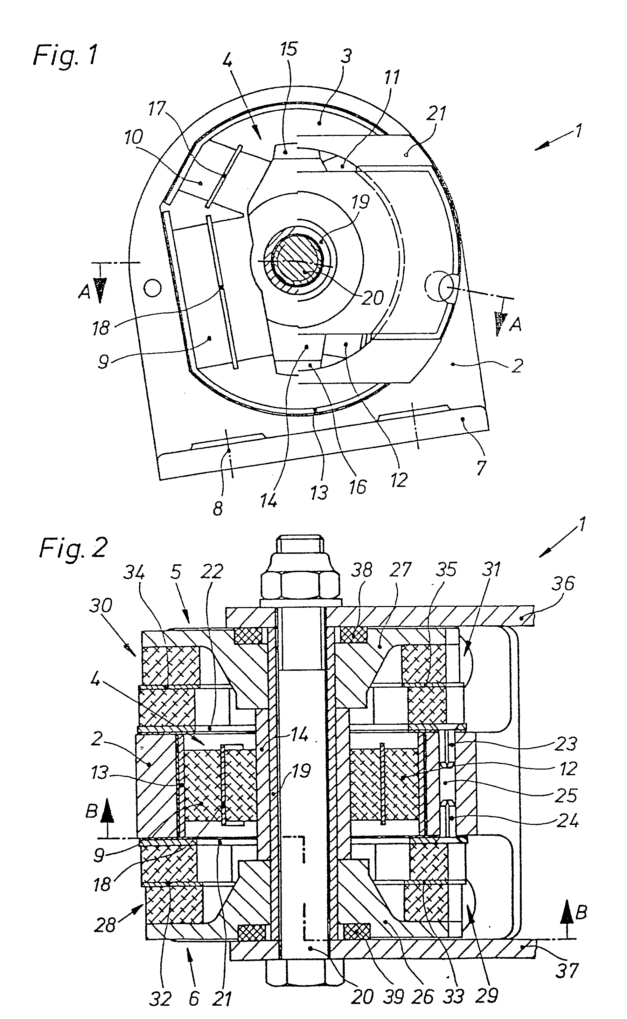

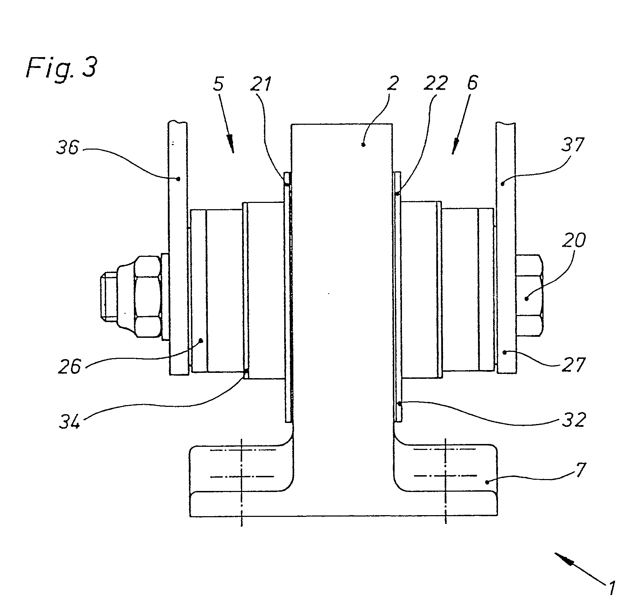

In Fig. 1 ist ein elastisches Lager 1 dargestellt, das im wesentlichen aus einem Gehäuse 2 mit einem etwa runden Aufnahmeauge 3, in das ein mittleres Gummimetallelement 4 eingesetzt ist, und seitlich aufgesetzten Gummimetallelementen 5, 6 (siehe Fig. 2) besteht. Das Gehäuse 2 enthält ein Fussteil 7 mit Bohrungen 8 zum Aufschrauben auf einen Lagerbock eines Fahrgestellrahmens an einem Lastkraftwagen. Beim mittleren Gummielement 4 sind gegenüberliegende Gummielemente 9, 10, und 11, 12 zwischen einem äusseren Metallring 13 und einem zentralen Metallteil 14 angehaftet. Die Haftflächen stehen dabei im wesentlichen senkrecht, so dass bei vertikaler Belastung die Gummielemente 9 bis 12 auf Schub beansprucht sind. An der Unter- und Oberseite des zentralen Metallteils 14 sind elastische Anschläge 15, 16 angebracht. In den Gummielementen 9 bis 12 sind Zwischenplatten 17, 18 zur Verhinderung einer Querdehnung einvulkanisiert. Im zentralen Metallteil 14 ist eine axial und horizontal verlaufende Bohrung angebracht, in der drehbar eine Distanzhülse 19 und in dieser ein Lagerbolzen 20 stecken. Das mittlere Gummimetallelement ist in das Aufnahmeauge 3 unter Druckvorspannung eingebracht, d.h. der äussere Metallring und die Gummielemente 9 bis 12 werden unter radialer Druckvorspannung in das Aufnahmeauge 3 eingeschoben. Der in Fig. 1 dargestellte Zustand des Lagers 1 entspricht dem fertig eingebauten Zustand mit der statischen Belastung durch das Fahrerhaus (ohne diese statische Belastung würden die mittlere Bohrung und der Lagerbolzen etwas höher liegen). In Fig. 2 sind wieder das Gehäuse 2 mit dem eingesetzten mittleren Gummimetallelement 4, dem äusseren Metallring 13, dem zentralen Metallteil 14, den Gummielementen 9, 12 und den Zwischenplatten 18 zu erkennen. An beiden Seiten des Gehäuses 2 sind die seitlichen Gummimetallelemente 5, 6 aufgesetzt. Beiderseits des Gehäuses 2 liegen Metallplatten 21, 22 am Gehäuse 2 an, die mit Kerbstiften 23, 24 in Bohrungen 25 am Gehäuse 2 gegen Verdrehen gesichert sind. Zwischen den Metallplatten 21, 22 und äusseren, sich zur Lagermitte hin sich verdickenden Metallteilen 26, 27 sind jeweils radial gegenüberliegend zwei, vertikal auf Schub beanspruchte Gummielemente 28, 29 und 30, 31 anvulkanisiert. In die Gummielemente 28 bis 31 sind zur Verhinderung der Querdehnung ebenfalls Zwischenplatten 32 bis 35 einvulkanisiert.

Mit dem Lagerbolzen 20 sind an beiden Seiten Blechteile 36, 37 der Stützeinrichtung am Fahrerhaus fest gegen die Distanzhülsen 19 verschraubt. In Ausnehmungen der Metallteile 26, 27 sind zu beiden Seiten des Lagers Gleitscheiben 38, 39 angebracht. Die Distanzhülse 19 ist so lang, dass bei zusammengeschraubten Blechteilen 36, 37 diese über die Gleitscheiben 38, 39 die gewünschte Vorspannung in den seitlichen Gummielementen 28 bis 31 bewirken. In der Ansicht gemäss Fig. 3 etwa horizontal und in Fahrtrichtung des Lastkraftwagens sind wieder das Gehäuse 2 mit Fussteil 7, die beiden seitlichen Gummimetallteile 5, 6 mit den äusseren Metallteilen 26, 27, den inneren Metallplatten 21, 22 und den Zwischenplatten 32, 34 zu erkennen. Weiter ist der durchgehende Lagerbolzen 20 und die beiden seitlichen Blechteile 36, 37 des Fahrerhauses dargestellt.

Die gezeigte Ausführungsform des elastischen Lagers 1 hat folgende Funktion:

Das Fahrerhaus (Blechteile 36, 37) kann durch die drehbar gelagerte Distanzhülse 19 im zentralen Metallteil 14 geklappt werden. Dabei gleiten die Blechteile 36, 37 an den Gleitscheiben 38, 39. Da einerseits die Reibung gering ist und andererseits am Fahrerhaus ein langer Hebel zur Verfügung steht, kann das Fahrerhaus mit nur geringem Krafteinsatz aufgeklappt werden. Im Fahrbetrieb werden vertikal angeregte Fahrstösse (das Gehäuse 2 bewegt sich in vertikaler Richtung) von den Gummielementen 9 bis 12 und 28 bis 31 in Schubrichtung aufgenommen. Die Federkonstante in der Schubrichtung ist relativ klein, wodurch das Fahrerhaus mit entsprechend grossen vertikalen Ausschlägen angenehm federt. Bei extremen vertikalen Stössen werden die Ausschläge durch die elastischen Anschläge 15, 16, die sich dann am Aufnahmeauge 3 anlegen, begrenzt.

Bei einer horizontal wirkenden Kraft in Fahrtrichtung (beispielsweise Trägheitskraft des Fahrerhauses beim Abbremsen) soll der Lagerbolzen 20 gegenüber dem Gehäuse 2 in Fig. 2 nach links bewegt werden. Dadurch wird das Gummielement 9 bei hoher Federkonstante auf Druck beansprucht, wodurch nur ein geringer Ausschlag möglich ist. Das gegenüberliegende und entlastete Gummielement ist so weit vorgespannt, dass es nicht auf Zug beansprucht wird. Die seitlichen Gummielemente 28 bis 31 werden dabei in Fahrtrichtung bei nur kleiner Federkonstante auf Schub beansprucht und tragen daher in diesem Fall zu einer starren Führung des Fahrerhauses nur wenig bei; die Führung wird somit hauptsächlich durch das in Fahrtrichtung liegende Gummielement 9 bewirkt.

Bei einer horizontal und quer zur Fahrtrichtung wirkenden Kraft, beispielsweise bei einer scharfen Rechtskurve, soll sich in Fig. 2 der Lagerbolzen 20 gegenüber dem Gehäuse 2 nach oben bewegen. Dabei werden die Gummielemente 28 bei hoher Federkonstante auf Druck beansprucht, wodurch nur ein geringer Ausschlag und eine relativ starre Querführung bewirkt wird. Die gegenüberliegenden Gummielemente 30, 31 werden nur entlastet und kommen wegen der Vorspannung ebenfalls nicht in den Zugbereich. Auch in dem Fall werden die inneren Gummielemente 9, 10 in Querrichtung auf Schub beansprucht, tragen aber wegen der kleinen Schubfederkonstante nur sehr wenig zur Abstützung des Fahrerhauses in Querrichtung bei.

Im praktischen Fahrbetrieb treten die vorbeschriebenen Vertikal- und Horizontalkräfte in überlagerter Form auf, wobei sich die beschriebenen Wirkungen in den einzelnen Richtungen überlagern.

Die inneren Gummielemente 9 bis 12 können, wie in dem Ausführungsbeispiel dargestellt, etwas geneigt sein bzw. die Haftflächen können in einem kleinen Winkel gegenüber der Senkrechten angestellt sein, wodurch eine weitere Feinabstimmung möglich ist. Weiter können die inneren Gummielemente geteilt sein, beispielsweise in die Gummielemente 9, 10. Dies kann sich insbesondere beim Einsatz von Zwischenplatten als zweckmässig erweisen, wenn diese und ihre Haftflächen bei bestimmten Dimensionierungen grossen Belastungen ausgesetzt sind.

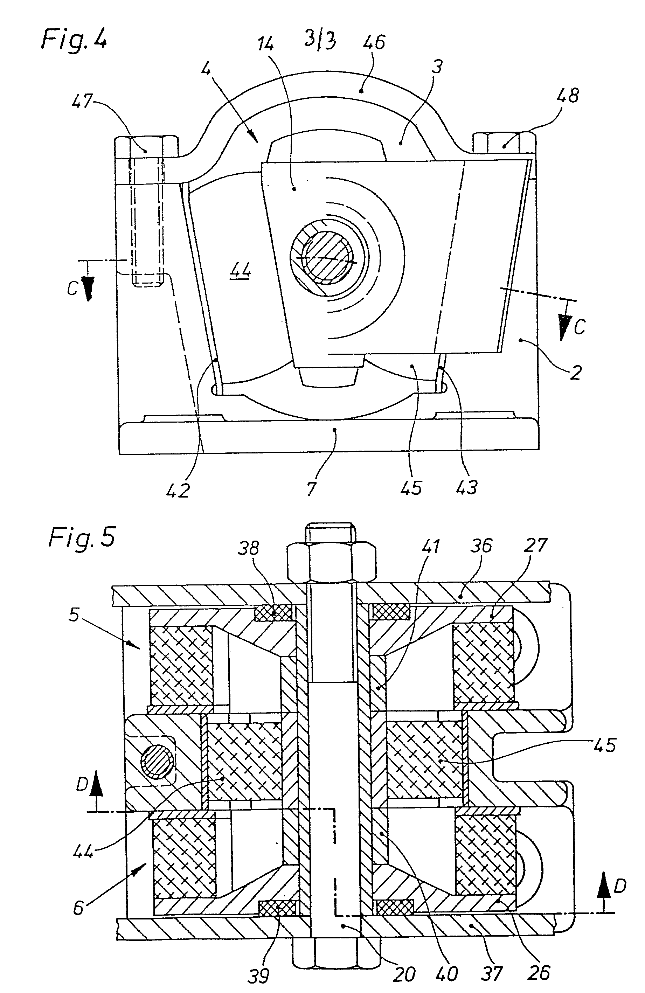

In Fig. 4 und 5 ist eine weitere Ausführungsform eines elastischen Lagers dargestellt, die in wesentlichen Teilen der ersten Ausführungsform entspricht, so dass für gleiche Teile der Einfachheit halber gleiche Bezugszeichen verwendet werden. Die Ausführungsform besteht ebenfalls aus einem Gehäuse 2 mit einem Fussteil 7 und einem Aufnahmeauge 3, in das ein inneres Gummimetallelement 4 eingesetzt ist. Seitlich sind auch hier Gummimetallelemente 5, 6 aufgesetzt, die gegen Verdrehen am Gehäuse 2 gesichert sind. Die seitlichen Gummimetallelemente werden ebenfalls über Blechteile 36, 37 des Fahrerhauses mit Hilfe eines Lagerbolzens 20 über Gleitscheiben 38, 39 zusammengespannt. Die seitlichen Gummimetallelemente 5, 6 unterscheiden sich gegenüber der ersten Ausführungsform im wesentlichen dadurch, dass keine Zwischenplatten vorgesehen sind, so dass hierdurch eine andere Dimensionierung der Federkonstanten und Ausschläge wegen der Möglichkeit einer grösseren Querdehnung der Gummielemente entsteht. Weiter sind die äusseren Metallteile 26, 27 zur Mitte des Lagers hin weniger stark verstärkt und liegen über Zwischenbuchsen 40, 41 am zentralen Metallteil 14 des inneren Gummimetallelementes 4 an.

Das Aufnahmeauge 3 ist hier keil- oder wannenförmig mit geraden Seitenflächen, die nach unten hin zusammenlaufen, ausgebildet. An diesen Seitenflächen liegt je eine Metallplatte 42, 43 an, zwischen denen und dem zentralen Metallteil 14 innere Gummielemente 44, 45 angehaftet sind. Die inneren Gummielemente 44, 45 enthalten hier keine Zwischenplatten.

Der obere Teil des Gehäuses 2 und damit der obere Teil des Aufnahmeauges 3 ist ein Bügel 46, der mit zwei Schrauben 47, 48 auf das Gehäuse 2 aufgeschraubt werden kann. Der Bügel 46 ist seitlich so abgeflacht, dass mit ihm die Metallplatten 42, 43 beim Zusammenschrauben in die in Fig. 4 gezeigte Stellung nach unten gedrückt werden und dadurch die Gummielemente 44, 45 vorgespannt werden. Das dargestellte keilförmige Aufnahmeauge 3 kann jedoch auch in einem ungeteilten Gehäuse 2 realisiert sein, wobei das innere Gummimetallelement 4 unter Vorspannung eingedrückt wird.

Die Wirkungsweise der zweiten Ausführungsform entspricht der oben in Verbindung mit der ersten Ausführungsform beschriebenen Funktion.

Zusammenfassend wird festgestellt, dass mit dem erfindungsgemässen elastischen Lager eine wesentliche Verbesserung des Fahrkomforts in einem klappbaren Fahrerhaus und eine wesentlich erhöhte Lebensdauer des Lagers bei extrem kleinen Platzbedarf für das Lager erzielt wird.

**Patentansprüche**

1. Elastische Fahrerhauslagerung (1) eines Lastkraftwagens, die an der Vorderseite zu beiden Seiten des Fahrerhauses am Fahrgestellrahmen angebracht ist, wobei die Lagerung aus zwei oder mehr Gummimetallelementen (4, 5, 6) besteht, von denen eines (4) im Aufnahmegehäuse (2) der Lagerung (1) befestigt ist und zur Aufnahme der Vertikalkräfte dient und wobei in diesem ersten Gummimetallteil (4) in einem inneren Metallteil (14) ein Lagerbolzen (20) drehbar enthalten ist und ein zweites Gummimetallelement (5, 6) zur Aufnahme der horizontalen Kräfte in Richtung des Lagerbolzens (20) vorgesehen ist, dadurch gekennzeichnet, dass die Gummihaftflächen des ersten Gummimetallelementes (4, bzw. 9 bis 12 und 44, 45) im wesentlichen senkrecht zur Fahrzeugaufstandsebene bzw. zum Fahrzeugrahmen angeordnet sind und dadurch Vertikalkräfte durch Schub in den Gummielementen (9 bis 12; 44, 45) übertragen werden und diese Gummihaftflächen in Fahrtrichtung bzw. quer zur Axialrichtung gegenüberliegen, so dass Horizontalkräfte in Fahrtrichtung durch Zug- und Druckspannungen in den Gummielementen (9 bis 12; 44, 45) übertragen werden und dass das zweite Gummimetallelement (5, 6) fahrzeugrahmenseitig und fahrerhausseitig Gummihaftflächen aufweist, die ebenfalls im wesentlichen senkrecht zur Fahrzeugaufstandsebene bzw. zum Fahrzeugrahmen ausgerichtet sind und dadurch ebenfalls Vertikalkräfte durch Schub in den Gummielementen (28 bis 31) übertragen werden und diese Gummihaftflächen in axialer Richtung bzw. quer zur Fahrtrichtung gegenüberliegen, so dass Horizontalkräfte in axialer Richtung durch Zug- und Druckspannung in den Gummielementen (28 bis 31) übertragen werden.

2. Elastisches Lager nach Anspruch 1, dadurch gekennzeichnet, dass das Gehäuse (2) ein annähernd rundes Aufnahmeauge (3) enthält.

3. Elastisches Lager nach Anspruch 1, dadurch gekennzeichnet, dass das Gehäuse (2) ein keilförmiges Aufnahmeauge (3) enthält.

4. Elastisches Lager nach einer der Ansprüche 1 bis 3, dadurch gekennzeichnet, dass im Aufnahmeauge zu beiden Seiten des Lagerbolzens (20) je mindestens ein Gummielement (9, 10 und 11, 12; 44, 45) des ersten Gummimetallelements unter Vorspannung enthalten ist, wobei sich der Lagerbolzen (20) durch ein den Gummielementen (9, 10 und 11, 12; 44, 45) gemeinsam mittleres Metallteil erstreckt, und dass beiderseits des Aufnahmeauges zweite Gummimetallelemente (5, 6) aufgesetzt sind, die gegen Verdrehen gegenüber dem Aufnahmeauge (3) am Gehäuse (2) gesichert sind und deren Gummielemente (28 bis 31) mit Hilfe des Lagerbolzens (20) axial vorgespannt sind.

5. Elastisches Lager nach einem der Ansprüche 1 bis 4, dadurch gekennzeichnet, dass wenigstens ein Teil der Gummielemente (9 bis 12, 28 bis 31) anvulkanisierte Zwischenplatten (17, 18, 32 bis 35) zur Verhinderung einer Querdehnung enthält.

6. Elastisches Lager nach Anspruch 4 oder 5, dadurch gekennzeichnet, dass das mittlere Metallteil (14) an beiden vertikalen Enden elastische Anschläge (15, 16) aufweist.

**Claims**

1. Elastic cab mounting (1) for a lorry which is fitted on the chassis frame at the front on both sides of the cab, the mounting consisting of two or more rubber-metal elements (4, 5, 6), whereof one, (4) is fixed in the accommodating housing (2) of the mounting (1) and serves to absorb the vertical forces, a rotatable mounting pin (20) being comprised in this first rubber-metal element (4) in an inner metal component (14) and provision being made for a second rubber-metal element (5, 6) for the absorption of the horizontal forces towards the mounting pin (20), characterised in that the rubber adhering surfaces of the first rubber-metal element (4, or 9 to 12 and 44, 45 respectively) are arranged essentially perpendicular to the bearing plane of the vehicle or to the chassis frame of the vehicle and that thereby vertical forces are transmitted by thrust in the rubber elements (9 to 12); 44, 45) and that these rubber adhering surfaces lie opposite each other in the direction of travel or transversely to the axial direction, so that horizontal forces in the direction of travel are transmitted by tensile and compressive stresses in the rubber elements (9 to 12; 44, 45) and that the second rubber-metal element (5, 6) has rubber adhering surfaces on the side of the vehicle chassis frame and on the side of the cab which are also aligned essentially perpendicular to the bearing plane of the vehicle or to the chassis frame of the vehicle and that thereby vertical forces are also transmitted by thrust in the rubber elements (28 to 31) and that these rubber adhering surfaces lie opposite each other in the axial direction or transversely to the direction of travel, so that horizontal forces in the axial direction are transmitted by tensile and compressive stresses in the rubber elements (28 to 31).

2. Elastic mounting according to claim 1, characterised in that the housing (2) comprises an approximately round receiving opening (3).

3. Elastic mounting according to claim 1, characterised in that the housing (2) comprises a wedge-shaped receiving opening (3).

4. Elastic mounting according to one of claims 1 to 3, characterised in that in the receiving opening, there is comprised on both sides of the mounting pin (20) at least one prestressed rubber element each (9, 10, and 11, 12; 44, 45) of the first rubber-metal element, the mounting pin (20) extending through a central metal component which is common to the rubber elements (9, 10, and 11, 12; 44, 45), and that on both sides of the receiving opening there are mounted the second rubber-metal elements (5, 6) which are secured on the housing (2) against rotation relative to the receiving opening (3) and whose rubber elements (28 to 31) are axially prestressed by means of the mounting pin (20).

5. Elastic mounting according to one of claims 1 to 4, characterised in that at least one portion of the rubber elements (9 to 12, 28 to 31) contains intermediate plates (17, 18, 32 to 35) attached by vulcanisation, to prevent transverse strain.

6. Elastic mounting according to claim 4 or 5, characterised in that the central metal component (14) has elastic stops (15, 16) at both vertical ends.

**Revendications**

1. Support de montage élastique (1) pour la cabine du conducteur d'un camion, monté sur le cadre de châssis du coté avant, de part et d'autre de la cabine du conducteur, ce support se composant de deux ou de plusieurs éléments métal-caoutchouc (4, 5, 6), dont l'un (4) est fixé dans un boîtier de logement (2) du support (1) et sert à l'absorption des forces verticales, un axe de support (20) étant contenu à rotation dans ce premier élément métal-caoutchouc (4) dans une pièce de métal intérieure (14), et un second élément métal-caoutchouc (5, 6) étant prévu pour absorber les forces horizontales dans la direction de l'axe de support (20), caractérisé en ce que les surfaces d'adhérence du caoutchouc du premier élément métal-caoutchouc (4 ou 9 à 12 et 44, 45) sont disposées dans l'essentiel perpendiculairement au plan de contact au sol du véhicule ou au châssis du véhicule et, de la sorte, les forces verticales sont transmises par cisaillement dans les éléments de caoutchouc (9 à 12; 44, 45) et ces surfaces d'adhérence du caoutchouc font face dans le sens de la marche ou transversalement par rapport à la direction axiale, de sorte que les forces horizontales dans le sens de la marche soient transmises par des efforts de traction et de compression dans les éléments de caoutchouc (9 à 12; 44, 45), et en ce que le second élément métal-caoutchouc (5, 6) présente, du côté du châssis du véhicule et du côté de la cabine du conducteur, des surfaces d'adhérence du caoutchouc qui sont également orientées dans l'essentiel perpendiculairement au plan de contact au sol du véhicule ou au châssis du véhicule et, de la sorte, les forces verticales sont également transmises par cisaillement dans les éléments de caoutchouc (28 à 31) et ces surfaces d'adhérence du caoutchouc font face en direction axiale ou transversalement par rapport au sens de la marche, de sorte que les forces horizontales en direction axiale soient transmises par des efforts de traction et de compression dans les éléments de caoutchouc (28 à 31).

2. Support élastique selon la revendication 1, caractérisé en ce que le boîtier (2) contient un oeil de logement approximativement circulaire (3).

3. Support élastique selon la revendication 1, caractérisé en ce que le boîtier (2) contient un oeil de logement en forme de coin (3).

4. Support élastique selon l'une quelconque des revendications 1 à 3, caractérisé en ce qu'au moins un élément de caoutchouc (9, 10 et 11, 12; 44, 45) du premier élément métal-caoutchouc est contenu sous précontrainte dans l'oeil de logement de chaque côté de l'axe de support (20), l'axe de support (20) s'étendant à travers une pièce de métal médiane, commune aux éléments de caoutchouc (9, 10 et 11, 12; 44, 45), et en ce qu'il est disposé, de part et d'autre de l'oeil de logement, des seconds éléments métal-caoutchouc (5, 6) qui sont fixés au boîtier (2) contre la rotation par rapport à l'oeil de logement (3) et dont les éléments de caoutchouc (28 à 31) sont précontraints axialement au moyen de l'axe de support (20).

5. Support élastique selon l'une quelconque des revendications 1 à 4, caractérisé en ce qu'une partie au moins des éléments de caoutchouc (9 à 12, 28 à 31) contient des plaques intermédiaires (17, 18, 32 à 35) fixées par vulcanisation, pour empêcher une dilatation transversale.

6. Support élastique selon la revendication 4 ou 5, caractérisé en ce que la pièce de métal médiane (14) présente des butées élastiques (15, 16) à ses deux extrémités verticales.

Fig. 1

Fig. 2

*Fig. 3*

Fig. 4

Fig. 5